# EUROPEAN PATENT APPLICATION

(11) **EP 3 499 697 A1**
(43) Date of publication of application: **19.06.2019**
(21) Application number: 18210123.8
(22) Date of filing: 04.12.2018
(51) Int. Cl.: H02M 1/36, H02H 3/253, H02M 1/42, H02H 9/02, H02M 7/12, F24F 11/30

(54) **POWER SUPPLY CIRCUIT, CONTROL METHOD, AND PROGRAM**

(30) Priority: 08.12.2017 JP 2017236112
(71) Applicant: MITSUBISHI HEAVY INDUSTRIES THERMAL SYSTEMS, LTD., 108-8215 Tokyo (JP)
(72) Inventor: Oono, Kenzo, Tokyo 108-8215 (JP); Sumiya, Atsuyuki, Tokyo 108-8215 (JP)
(74) Representative: Henkel, Breuer & Partner

(57) **Abstract**

A power supply circuit (1) including:
a three-phase AC power supply (10) that includes a first terminal, a second terminal and a third terminal corresponding to three phases;
a rectifier circuit (20) configured to rectify power of the three-phase AC power supply;
a capacitor (C1) configured to smooth an output voltage of the rectifier circuit;
a first switch (SW2) configured to switch connection and disconnection of the rectifier circuit and the first terminal;
a second switch (SW3) configured to switch connection and disconnection of the rectifier circuit and the second terminal;
a third switch (SW4) configured to switch connection and disconnection of the rectifier circuit and the third terminal;
a fourth switch (SW1) and an inrush current suppression circuit (Rl) which are connected together in series and are provided in parallel with the first switch;
a control unit (40) which is configured to cause the capacitor to be fully charged by performing control of what to bring the fourth switch and one of the second switch and the third switch into a closed state, and to bring the first switch and the other one of the second switch and the third switch into an open state; and
a determination unit configured to determine an open-phase in the three-phase AC power supply on the basis of an output voltage of the rectifier circuit in each state of the first switch, the second switch, the third switch, and the fourth switch controlled by the control unit.

## Description

### BACKGROUND OF THE INVENTION

### Field of the Invention

The present invention relates to a power supply circuit, a control method, and a program.

### Description of Related Art

It is known that an overcurrent may flow into a capacitor in which charge is not accumulated at the time of startup of a power supply circuit. This overcurrent is generally referred to as an inrush current.

Patent Document 1 discloses a technology for limiting an inrush current in an air conditioner.

### [Patent Documents]

[Patent Document 1] Japanese Unexamined Patent Application, First Publication No. H4-161097

### SUMMARY OF THE INVENTION

Incidentally, a technology which can reduce inrush power and determine whether there is an open-phase in a three-phase AC power supply is required in a power supply circuit which generates DC power from a three-phase AC power supply.

An object of the present invention is to provide a power supply circuit, a control method, and a program which can solve the above problems.

According to a first aspect of the present invention, a power supply circuit includes a three-phase AC power supply that includes a first terminal, a second terminal and a third terminal corresponding to three phases, a rectifier circuit configured to rectify power of the three-phase AC power supply, a capacitor configured to smooth an output voltage of the rectifier circuit, a first switch configured to switch connection and disconnection of the rectifier circuit and the first terminal, a second switch configured to switch connection and disconnection of the rectifier circuit and the second terminal, a third switch configured to switch connection and disconnection of the rectifier circuit and the third terminal, a fourth switch and an inrush current suppression circuit which are connected together in series and are provided in parallel with the first switch, a control unit which is configured to cause the capacitor to be fully charged by performing control of what to bring the fourth switch and one of the second switch and the third switch into a closed state, and to bring the first switch and the other one of the second switch and the third switch into an open state; and a determination unit configured to determine an open-phase in the three-phase AC power supply on the basis of an output voltage of the rectifier circuit in each state of the first switch, the second switch, the third switch, and the fourth switch controlled by the control unit.

According to a second aspect of the present invention, in the power supply circuit according to the first aspect, the determination unit is configured to determine defects of a phase corresponding to the fourth switch and a phase corresponding to one of the second switch and the third switch when the fourth switch and one of the second switch and the third switch are in a closed state, and the first switch and the other of the second switch and the third switch are in an open state.

According to a third aspect of the present invention, in the power supply circuit according to the first aspect or the second aspect, the determination unit is configured to determine defects of a phase corresponding to the first switch and a phase corresponding to the other of the second switch and the third switch when the fourth switch and one of the second switch and the third switch are in the open state, and the first switch and the other of the second switch and the third switch are in the closed state.

According to a fourth aspect, a determination method of a power supply circuit which includes a three-phase AC power supply that includes a first terminal, a second terminal and a third terminal corresponding to three phases, a rectifier circuit that is configured to rectify power of the three-phase AC power supply, a capacitor that is configured to smooth an output voltage of the rectifier circuit, a first switch configured to switch connection and disconnection of the rectifier circuit and the first terminal, a second switch configured to switch connection and disconnection of the rectifier circuit and the second terminal, a third switch configured to switch connection and disconnection of the rectifier circuit and the third terminal, and a fourth switch and an inrush current suppression circuit which are connected together in series and are provided in parallel with the first switch, includes performing control of what to bring the fourth switch and one of the second switch and the third switch into a closed state, and to bring the first switch and the other of the second switch and the third switch into an open state, and causing the capacitor to be fully charged; and determining an open-phase in the three-phase AC power supply on the basis of an output voltage of the rectifier circuit in a state of each of the controlled first switch, second switch, third switch, and fourth switch.

According to a fifth aspect, a program causes a computer of a power supply circuit, which includes a three-phase AC power supply that includes a first terminal, a second terminal and a third terminal corresponding to three phases, a rectifier circuit that is configured to rectify power of the three-phase AC power supply, a capacitor that is configured to smooth an output voltage of the rectifier circuit, a first switch configured to switch connection and disconnection of the rectifier circuit and the first terminal, a second switch configured to switch connection and disconnection of the rectifier circuit and the second terminal, a third switch configured to switch connection and disconnection of the rectifier circuit and the third terminal, and a fourth switch and an inrush current suppression circuit which are connected together in series and are provided in parallel with the first switch, to execute performing control of what to bring the fourth switch and one of the second switch and the third switch into a closed state, and to bring the first switch and the other of the second switch and the third switch into an open state, and causing the capacitor to be fully charged; and determining an open-phase in the three-phase AC power supply on the basis of an output voltage of the rectifier circuit in a state of each of the controlled first switch, second switch, third switch, and fourth switch.

According to a power supply circuit of the embodiment of the present invention, it is possible to reduce inrush power and to determine whether there is an open-phase in a three-phase AC power supply.

### BRIEF DESCRIPTION OF THE DRAWINGS

FIG. 1 is a diagram which shows a configuration of a power supply circuit according to an embodiment of the present invention.
FIG. 2 is a diagram which shows a control signal output by a control unit according to an embodiment of the present invention.
FIG. 3 is a first diagram which shows a processing flow of the power supply circuit according to an embodiment of the present invention.
FIG. 4 is a second diagram which shows a processing flow of the power supply circuit according to an embodiment of the present invention.
FIG. 5 is a schematic block diagram which shows a configuration of a computer according to at least one embodiment.

### DETAILED DESCRIPTION OF THE INVENTION

### <Embodiment>

Hereinafter, a configuration of a power supply circuit according to an embodiment of the present invention will be described.

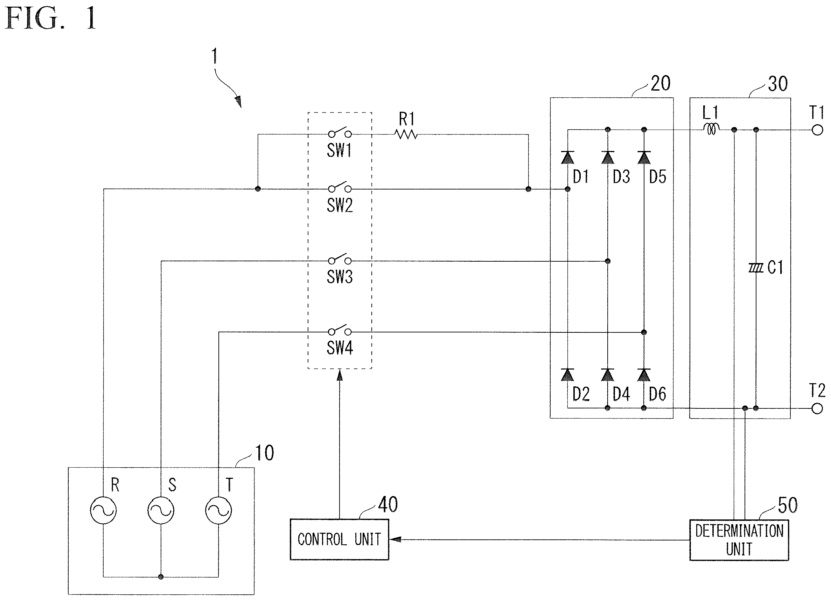

A power supply circuit 1 according to an embodiment of the present invention is a circuit which reduces a maximum current of an overcurrent flowing inside a power supply circuit 1 at the time of startup, and generates a DC voltage from a three-phase AC power supply at the time in a steady state. The power supply circuit 1, as shown in FIG. 1, includes a three-phase AC power supply 10, a rectifier circuit 20, a smoothing circuit 30, a control unit 40, a determination unit 50, a resistor R1 (an example of an inrush current suppression circuit), and switches SW1, SW2, SW3, and SW4. At the time of startup of the power supply circuit 1, a current flows into a path for charging a capacitor C1.

The three-phase AC power supply 10 outputs three AC voltages of an R-phase, an S-phase, and a T-phase that differ by 120 degrees from each other. The three-phase AC power supply 10 includes an R terminal which is an output terminal of the R-phase, an S terminal which is an output terminal of the S-phase, and a T terminal which is an output terminal of the T-phase.

The rectifier circuit 20 receives three AC voltages of the R-phase, the S-phase, and the T-phase, and rectifies the received AC voltages. The rectifier circuit 20 includes, for example, diodes D1, D2, D3, D4, D5, and D6 as shown in FIG 1. Each of the diodes D1, D2, D3, D4, D5, and D6 includes an anode terminal and a cathode terminal.

A cathode terminal of the diode D1 is connected to a cathode terminal of the diode D3, a cathode terminal of the diode D5, and a first terminal of the reactor L1.

An anode terminal of the diode D2 is connected to an anode terminal of the diode D4, an anode terminal of the diode D6, and a first terminal of the capacitor C1.

A second terminal of the capacitor C1 is connected to a second terminal of the reactor L1.

The smoothing circuit 30 smoothes a rectified voltage output by the rectifier circuit 20. The smoothing circuit 30 includes a capacitor C1 and a reactor L1. Each of the capacitor C1 and the reactor L1 includes a first terminal and a second terminal.

The control unit 40 performs control to switch each of the switches SW1, SW2, SW3, and SW4 to an ON state or an OFF state.

The determination unit 50 determines an open-phase of the three-phase AC power supply 10 on the basis of an inter-terminal voltage of the capacitor C1.

The resistor R1 is a resistor which reduces a maximum current of an overcurrent that flows into the power supply circuit 1 at the time of startup of the power supply circuit 1 and is generally referred to as an "inrush current." The resistor R1 includes a first terminal and a second terminal.

Each of the switches SW1, SW2, SW3, and SW4 includes a first terminal and a second terminal.

The R terminal is connected to a first terminal of the switch SW1 and a first terminal of the switch SW2. The S terminal is connected to a first terminal of the switch SW3. The T terminal is connected to a first terminal of the switch SW4.

A second terminal of the switch SW1 is connected to a first terminal of the resistor R1. A second terminal of the switch SW2 is connected to an anode terminal of the diode D1 and a second terminal of the resistor R1. A second terminal of the switch SW3 is connected to an anode terminal of the diode D3 and a cathode terminal of the diode D4. The second terminal of the switch SW4 is connected to the anode terminal of the diode D5 and the cathode terminal of the diode D6.

The second terminal of the capacitor C1 is a terminal T1 of the power supply circuit 1. The first terminal of the capacitor C1 is a terminal T2 of the power supply circuit 1. The power supply circuit 1 outputs a DC voltage with the terminal T2 as a reference potential from the terminal T1 in the steady state.

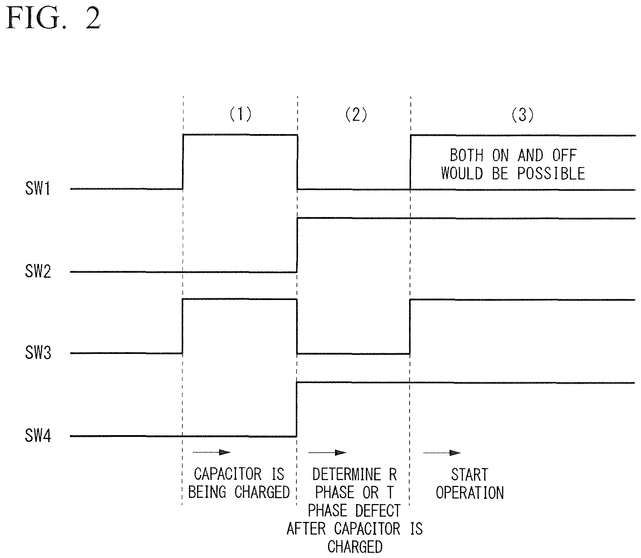

Each of the switches SW1, SW2, SW3, and SW4 reduces a maximum current of the inrush current at the time of startup of the power supply circuit 1 on the basis of control by the control unit 40, and is brought into in the OFF state (an open state) or the ON state (a closed state) such that an open-phase of the three-phase AC power supply 10 can be determined. Specifically, as shown in FIG. 2, each of the switches SW1 and SW3 is in the ON state and each of the switches SW2 and SW4 is in the OFF state on the basis of the control by the control unit 40 in a period T1 during which the capacitor C1 is charged to become fully charged. In this period T1, the determination unit 50 determines an open-phase of the R phase and the S phase. In addition, each of the switches SW1 and SW3 is in the OFF state and each of the switches SW2 and SW4 is in the ON state on the basis of the control by the control unit 40 in a period T2 after the capacitor C1 is fully charged. In this period T2, the determination unit 50 determines an open-phase of the R phase and the T phase. Then, the switch SW1 is brought into the ON state or the OFF state, and each of the switches SW2, SW3, and SW4 is brought into the ON state on the basis of the control by the control unit 40 in a period T3 after an operation starts.

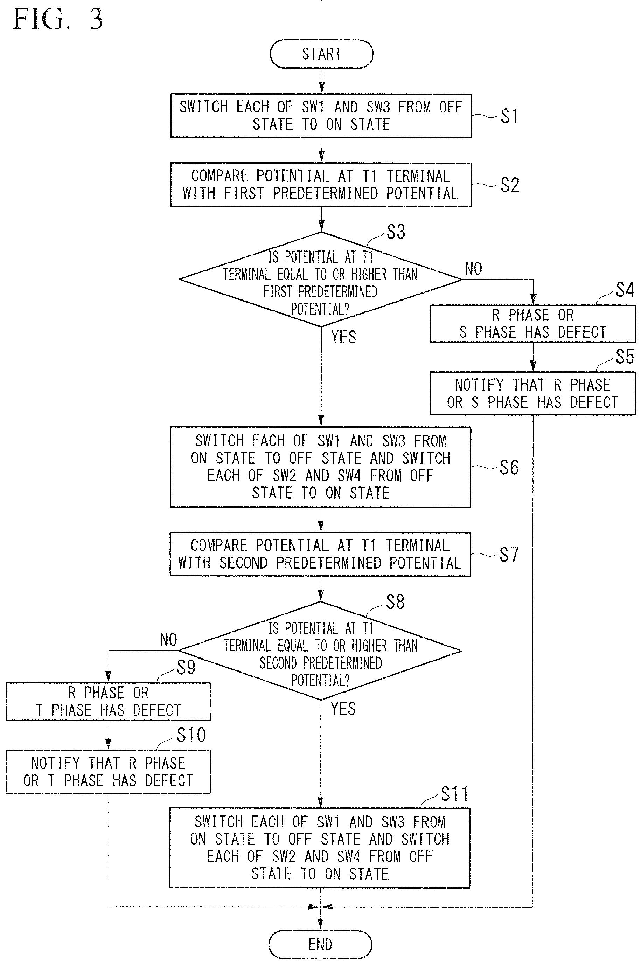

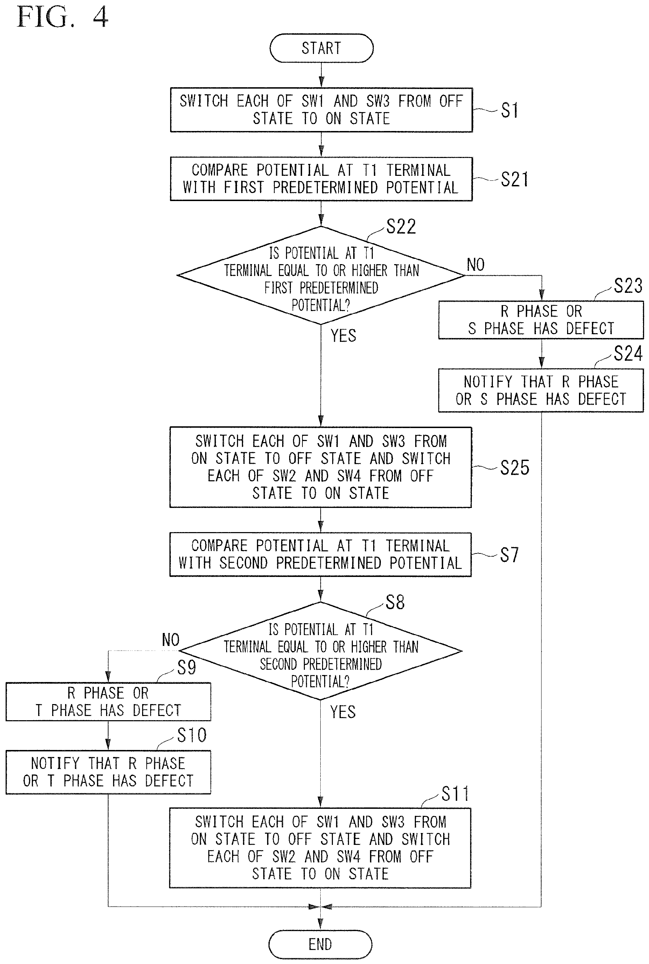

Next, processing of the power supply circuit 1 according to an embodiment of the present invention will be described with reference to FIGS. 3 and 4.

Each of the switches SW1, SW2, SW3, and SW4 before startup of the power supply circuit 1 is in the OFF state (open state). In addition, before the startup of the power supply circuit 1, it is assumed that charge is not accumulated in the capacitor C1.

The control unit 40 switches each of the switches SW1 and SW3 from the OFF state to the ON state at the time of startup of the power supply circuit 1 (step S1).

If each of the switches SW1 and SW3 is in the ON state, a current path is formed between the R-phase and the S-phase.

The current flowing at the time of startup of the power supply circuit 1 when a potential at the R terminal is higher than a potential at the S terminal differs from that when the potential at the S terminal is higher than the potential at the R terminal.

Hereinafter, a current flowing through the power supply circuit 1 will be described for each of a case in which the potential at the R terminal is higher than the potential at the S terminal and a case in which the potential at the S terminal is higher than the potential at the R terminal.

### (Case in which potential at R terminal is higher than potential at S terminal)

First, a current flowing through the power supply circuit 1 in a case in which the potential at the R terminal is higher than the potential at the S terminal will be described.

In a case in which the potential at the R terminal is higher than the potential at the S terminal, if the control unit 40 switches each of the switches SW1 and SW3 from the OFF state to the ON state at the time of startup of the power supply circuit 1, a first charging path passing through the three-phase AC power supply 10 via the R terminal, the switch SW1, the resistor R1, the diode D1, the reactor L1, the capacitor C1, the diode D4, the switch SW3, and the S terminal is formed.

Here, it is assumed that each of the R terminal, the switch SW1, the diode D1, the reactor L1, the capacitor C1, the diode D4, the switch SW3, the S terminal, and the three-phase AC power supply 10 is an ideal element. An ideal element is an element whose impedance is negligibly small and is approximately 0 ohms, and in which infinite current can flow. However, a diode has a forward voltage VF as an offset voltage.

In the first charging path, an impedance of each of the R terminal, the switch SW1, the diode D1, the reactor L1, the capacitor C1, the diode D4, the switch SW3, the S terminal, and three-phase AC power supply 10 is negligibly small and is approximately 0 ohms. For this reason, regarding an impedance of the first charging path, an impedance of the resistor R1 is dominant as compared with the impedances of other elements in the first charging path. With this resistor R1, an inrush current flowing through the first charging path is reduced.

Here, if a period during which the first charging path is formed by the control unit 40 switching each of the switches SW1 and SW3 from the OFF state to the ON state is set as a period T1, the determination unit 50 determines the open-phase of the R-phase and the S-phase of the three-phase AC power supply 10 on the basis of an inter-terminal voltage of the capacitor C1 in the period T1. Specifically, the determination unit 50 compares potential at a T1 terminal which is based on a potential at a T2 terminal with a first predetermined potential indicating that the capacitor C1 is charged (step S2). The determination unit 50 determines whether the potential at the T1 terminal which is based on the potential at the T2 terminal is equal to or higher than a first predetermined potential (step S3).

When the determination unit 50 determines that the potential at the T1 terminal is less than the first predetermined potential (NO in step S3), it is determined that the capacitor C1 is not charged, that is, there is a disconnection in the first charging path and either the R-phase or the S-phase is an open-phase (step S4). Then, the determination unit 50 notifies that the R-phase or the S-phase is an open-phase by, for example, displaying this on a display unit, and the like (step S5). The determination unit 50 ends the processing.

In addition, when the determination unit 50 determines that the potential at the T1 terminal is equal to or higher than the first predetermined potential (YES in step S3), it is determined that the capacitor C1 is charged, that is, there is no open-phase in the first charging path (no disconnection). When the determination unit 50 determines that there is no open-phase in the first charging path and the potential at the T1 terminal is constant (that is, when the capacitor C1 is fully charged), the control unit 40 switches each of the switches SW1 and SW3 from the ON state to the OFF state, and switches each of the switches SW2 and SW4 from the OFF state to the ON state (step S6).

If each of the switches SW1 and SW3 is switched to the OFF state, and each of the switches SW2 and SW4 is switched to the ON state, a current path is formed between the R-phase and the T-phase.

At this time, a current flowing through the power supply circuit 1 when the potential at the R terminal is higher than the potential at the T terminal differs from that when the potential at the T terminal is higher than the potential at the R terminal.

### (Case in which potential at R terminal is higher than potential at T terminal)

First, the case in which the potential at the R terminal is higher than the potential at the T terminal will be described. When the potential at the R terminal is higher than the potential at the T terminal, a second charging path passing through the three-phase AC power supply 10 via the R terminal, the switch SW2, the diode D1, the reactor L1, the capacitor C1, the diode D6, the switch SW4, and the T terminal is formed.

Here, it is assumed that each of the R terminal, the switch SW2, the diode D1, the reactor L1, the capacitor C1, the diode D6, the switch SW4, the T terminal, and the three-phase AC power supply 10 is an ideal element.

In the second charging path, an impedance of each of the R terminal, the switch SW2, the diode D1, the reactor L1, the capacitor C1, the diode D6, the switch SW4, the T terminal, and the three-phase AC power supply 10 is negligibly small and is approximately 0 ohms. For this reason, the impedance of the second charging path is negligibly small and is approximately 0 ohms.

Here, if a period during which the second charging path is formed by the control unit 40 switching each of the switches SW1 and SW3 from the ON state to the OFF state and switching each of the switches SW2 and SW4 from the OFF state to the ON state is set to the period T2, the determination unit 50 determines the open-phase of an R phase and a T-phase of the three-phase AC power supply 10 on the basis of an inter-terminal voltage of the capacitor C1 in the period T2. Specifically, the determination unit 50 compares a potential at the T1 terminal which is based on a potential at the T2 terminal with a second predetermined potential indicating that the capacitor C1 is fully charged (step S7). The determination unit 50 determines whether the potential at the T1 terminal which is based on a potential at the T2 terminal is equal to or higher than the second predetermined potential (step S8).

When the determination unit 50 determines that the potential at the T1 terminal is less than the second predetermined potential (NO in step S8), it is determined that the capacitor C1 is not fully charged, that is, there is a disconnection in the second charging path, the R-phase or the T-phase is an open-phase, and charge of the capacitor C1 is discharged (step S9). Then, the determination unit 50 notifies that the R-phase or the T-phase is an open-phase by, for example, displaying this on a display unit, and the like (step S10). The determination unit 50 ends the processing.

In addition, when the determination unit 50 determines that the potential at the T1 terminal is equal to or higher than the second predetermined potential (YES in step S8), it is determined that the capacitor C1 is fully charged, that is, there is no open-phase in the second charging path (no disconnection). When the determination unit 50 determines that there is no open-phase in the second charging path, the control unit 40 switches, for example, the switch SW3 from the OFF state to the ON state, and starts the operation (step S11). The control unit 40 ends the processing.

### (Case in which potential at T terminal is higher than potential at R terminal)

Next, the case in which the potential at the T terminal is higher than the potential at the R terminal will be described. A current path in the case in which the potential at the T terminal is higher than the potential at the R terminal differs from that in the case in which the potential at the R terminal is higher than the potential at the T terminal. However, processing of the power supply circuit 1 is shown in the processing flow shown in FIG. 3.

When the potential at the T terminal is higher than the potential at the R terminal, a third charging path passing through the three-phase AC power supply 10 via the T terminal, the switch SW4, the diode D5, the reactor L1, the capacitor C1, the diode D2, the switch SW2, and the R terminal is formed.

Here, it is assumed that each of the T terminal, the switch SW4, the diode D5, the reactor L1, the capacitor C1, the diode D2, the switch SW2, the R terminal, and the three-phase AC power supply 10 is an ideal element.

In the third charging path, an impedance of each of the T terminal, the switch SW4, the diode D5, the reactor L1, the capacitor C1, the diode D2, the switch SW2, the R terminal, and the three-phase AC power supply 10 is negligibly small and is approximately 0 ohms. For this reason, the impedance of the third charging path is negligibly small and is approximately 0 ohms.

Here, if a period during which the third charging path is formed by the control unit 40 switching each of the switches SW1 and SW3 from the ON state to the OFF state and switching each of the switches SW2 and SW4 from the OFF state to the ON state is set to the period T2, the determination unit 50 determines the open-phase of the R phase and the T-phase of the three-phase AC power supply 10 on the basis of an inter-terminal voltage of the capacitor C1 in the period T2. Specifically, the determination unit 50 compares the potential at the T1 terminal which is based on a potential at the T2 terminal with a third predetermined potential indicating that the capacitor C1 is fully charged (step S7). The determination unit 50 determines whether the potential at the T1 terminal which is based on a potential at the T2 terminal is equal to or higher than the third predetermined potential (step S8).

When it is determined that the potential of the T1 terminal is less than the third predetermined potential (NO in step S8), the determination unit 50 determines that the capacitor C1 is not fully charged, that is, there is a disconnection in the third charging path, the R phase or the T phase is an open-phase, and charge of the capacitor C1 is discharged (step S9). Then, the determination unit 50 notifies that the R phase or the T phase is an open-phase by, for example, displaying this on a display unit, and the like (step S10). The control unit 40 ends the processing.

In addition, when the potential of the T1 terminal is equal to or higher than the third predetermined potential (YES in step S8), the determination unit 50 determines that the capacitor C1 is fully charged, that is, there is no open-phase in the third charging path (no disconnection). When the determination unit 50 determines that there is no open-phase in the third charging path, the control unit 40 switches, for example, the switch SW3 from the OFF state to the ON state, and starts operation (step S11). The control unit 40 ends the processing.

### (Case in which potential at S terminal is higher than potential at R terminal)

Next, a current flowing through the power supply circuit 1 when the potential at the S terminal is higher than the terminal at the R terminal will be described.

When the potential at the S terminal is higher than the potential at the R terminal, if the control unit 40 switches each of the switches SW1 and SW3 from the OFF state to the ON state at the time of startup of the power supply circuit 1, a fourth charging path passing through the three-phase AC power supply 10 is formed via the S terminal, the switch SW3, the diode D3, the reactor L1, the capacitor C1, the diode D2, the resistor R1, the switch SW1, and the R terminal.

Here, it is assumed that each of the S terminal, the switch SW3, the diode D3, the reactor L1, the capacitor C1, the diode D2, the resistor R1, the switch SW1, the R terminal, and the three-phase AC power supply 10 is an ideal element. An ideal element is an element whose impedance is negligibly small and is approximately 0 ohms, and in which infinite current can flow. However, a diode has a forward voltage VF as an offset voltage.

In the fourth charging path, an impedance of each of the S terminal, the switch SW3, the diode D3, the reactor L1, the capacitor C1, the diode D2, the switch SW1, the R terminal, and the three-phase AC power supply 10 is negligibly small and is approximately 0 ohms. For this reason, regarding an impedance of the fourth charging path, the impedance of the resistor R1 is dominant as compared with the impedance of other elements in the fourth charging path. With this resistor R1, an inrush current flowing through the fourth charging path is reduced.

Here, if a period during which the fourth charging path is formed by the control unit 40 switching each of the switches SW1 and SW3 from the OFF state to the ON state is set as the period T1, the determination unit 50 determines the open-phase of the R-phase and the S-phase of the three-phase AC power supply 10 on the basis of an inter-terminal voltage of the capacitor C1 in the period T1. Specifically, the determination unit 50 compares the potential of the T1 terminal which is based on a potential at the T2 terminal with a fourth predetermined potential indicating that the capacitor C1 is charged (step S21). The determination unit 50 determines whether the potential of the T1 terminal which is based on a potential at the T2 terminal is equal to or higher than the fourth predetermined potential (step S22).

When the determination unit 50 determines that the potential at the T1 terminal is less than the first predetermined potential (NO in step S22), it is determined that the capacitor C1 is not charged, that is, there is a disconnection in the fourth charging path and either the R-phase or the S-phase is an open-phase (step S23). Then, the determination unit 50 notifies that the R-phase or the S-phase is an open-phase by, for example, displaying this on a display unit, and the like (step S24). The determination unit 50 ends the processing.

In addition, when the determination unit 50 determines that the potential at the T1 terminal is equal to or higher than the fourth predetermined potential (YES in step S22), it is determined that the capacitor C1 is charged, that is, there is no open-phase in the fourth charging path (no disconnection). When the determination unit 50 determines that there is no open-phase in the fourth charging path and the potential at the T1 terminal is constant (that is, when the capacitor C1 is fully charged), the control unit 40 switches each of the switches SW1 and SW3 from the ON state to the OFF state, and switches each of the switches SW2 and SW4 from the OFF state to the ON state (step S25).

If each of the switches SW1 and SW3 is switched to the OFF state, and each of the switches SW2 and SW4 is switched to the ON state, a current path is formed between the R-phase and the T-phase.

At this time, a current flowing through the power supply circuit 1 when the potential at the R terminal is higher than the potential at the T terminal differs from that when the potential at the T terminal is higher than the potential at the R terminal. Processing when the potential at the R terminal is higher than the potential at the T terminal is the same as the processing of steps S7 to S11 described above. In addition, a current path when the potential at the T terminal is higher than the potential at the R terminal differs from that when the potential at the R terminal is higher than the potential at the T terminal. However, the processing of the power supply circuit 1 is shown in a processing flow shown in FIG. 4.

The power supply circuit 1 according to one embodiment of the present invention has been described above. In the power supply circuit 1, the control unit 40 sets switches corresponding to each of a phase provided with the resistor R1 which is an example of the inrush current suppression circuit and another phase to the closed state, and sets the other switches to the open state. The determination unit 50 determines an open-phase of a phase corresponding to the switches in the closed state on the basis of a voltage of the capacitor C1 which smoothes an output voltage of the rectifier circuit 20. In addition, in the power supply circuit 1, the control unit 40 sets switches corresponding to each of a phase provided with the resistor R1 which is an example of the inrush current suppression circuit and another phase to the open state, and sets the other switch to the closed state. The determination unit 50 determines an open-phase of a phase corresponding to the switch in the closed state on the basis of a voltage of the capacitor C1 which smoothes the output voltage of the rectifier circuit 20.

The control unit 40 reduces an inrush current by constituting the path for charging the capacitor C1 via the resistor R1 by controlling a switch. Then, the determination unit 50 determines an open-phase in the path constituted on the basis of a voltage between both terminals of the capacitor C1. Thereafter, the control unit 40 controls a switch provided in parallel with the resistor R11 in the phase provided with the resistor R1 and a switch provided in a phase in which the path for charging the capacitor C1 is not constituted, and constitutes a path through which a current flows. Then, the determination unit 50 determines an open-phase in the path constituted on the basis of a voltage between both terminals of the capacitor C1.

In this manner, the power supply circuit 1 can reduce the inrush current at the time of startup, and determine an open-phase in the three-phase AC power supply.

The power supply circuit 1 has been described by taking an example of a resistor as an inrush current suppression circuit in one embodiment of the present invention. However, the inrush current suppression circuit may also be a thermistor in another embodiment of the present invention.

In one embodiment of the present invention, the power supply circuit 1 has been described to have the inrush current suppression circuit provided in the R phase. However, in another embodiment of the present invention, the inrush current suppression circuit may also be provided in the S phase. In this case, replacing the R phase with the S phase, the S phase with the R phase, or replacing the R phase with the S phase, the S phase with the T phase, and the T phase with the R phase may be conceived in the above description. In addition, in another embodiment of the present invention, the inrush current suppression circuit may also be provided in the T phase. In this case, replacing the R phase with the T phase, the T phase with the R phase, or replacing the R phase with the T phase, the T phase with the S phase, and the S phase with the R phase may be conceived in the above description.

In the processing in the embodiment of the present invention, the order of processing may be switched within a range in which appropriate processing is performed.

Each of the storage units may be provided in any place within a range in which transmission and reception of appropriate information are performed. In addition, a plurality of each of the storage units may be present within the range in which transmission and reception of appropriate information are performed, and may store data in a dispersed manner.

Although the embodiment of the present invention has been described, the control unit 40, the determination unit 50, and other control devices described above may have a computer system therein. Then, processes of the processing described above are stored in a computer-readable recording medium in a form of program, and the processing is performed by a computer reading and executing this program. A specific example of the computer will be shown below.

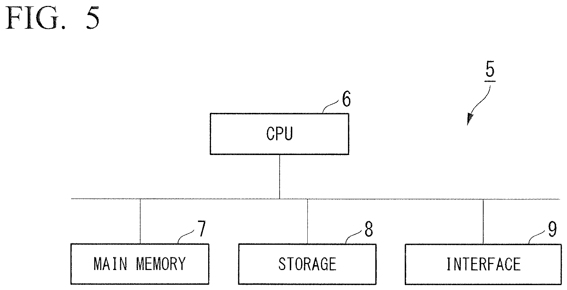

FIG. 5 is a schematic block diagram which shows a configuration of a computer according to at least one embodiment.

A computer 5 includes, as shown in FIG. 5, a CPU 6, a main memory 7, a storage 8, and an interface 9.

For example, each of the control unit 40, the determination unit 50, and other control devices described above is mounted on the computer 5. Then, an operation of each processing unit described above is stored in the storage 8 in the form of program. The CPU 6 reads the program from the storage 8 to develop it in the main memory 7, and executes the processing described above according to the program. In addition, the CPU 6 secures a storage area corresponding to each storage unit described above in the main memory 7 according to the program.

Examples of the storage 8 include a hard disk drive (HDD), a solid state drive (SSD), a magnetic disk, a magneto-optical disc, a compact disc read only memory (CD-ROM), a digital versatile disc read only memory (DVD-ROM), a semiconductor memory, and the like. The storage 8 may be an internal media directly connected to a bus of the computer 5, and may also be an external media connected to the computer 5 via the interface 9 or a communication line. In addition, when this program is distributed to the computer 5 through a communication line, the computer 5 which receives this distributed program may develop the program in the main memory 7, and execute the processing described above. In at least one embodiment, the storage 8 is a non-transitory tangible storage medium.

In addition, the program described above may realize some of the functions described above. Furthermore, the program may be a file, a so-called difference file (a difference program), which can realize the functions described above in combination with a program that is already recorded in a computer system.

Several embodiments of the present invention have been described, but these embodiments are examples, and do not limit the scope of the invention. Various additions, omissions, substitutions, and changes may be made in these embodiments within a range not departing from the gist of the invention.

While preferred embodiments of the invention have been described and illustrated above, it should be understood that these are exemplary examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

- 1: Power supply circuit
- 10: Three-phase AC power supply
- 20: Rectifier circuit
- 30: Smoothing circuit
- 40: Control unit
- 50: Determination unit
- R1: Resistor
- C1: Capacitor
- L1: Reactor
- D1, D2, D3, D4, D5, D6: Diode
- SW1, SW2, SW3, SW4: Switch

## Claims

1. A power supply circuit (1) comprising:
a three-phase AC power supply (10) that includes a first terminal, a second terminal and a third terminal corresponding to three phases;
a rectifier circuit (20) configured to rectify power of the three-phase AC power supply;
a capacitor (C1) configured to smooth an output voltage of the rectifier circuit;
a first switch (SW2) configured to switch connection and disconnection of the rectifier circuit and the first terminal;
a second switch (SW3) configured to switch connection and disconnection of the rectifier circuit and the second terminal;
a third switch (SW4) configured to switch connection and disconnection of the rectifier circuit and the third terminal;
a fourth switch (SW1) and an inrush current suppression circuit (R1) which are connected together in series and are provided in parallel with the first switch;
a control unit (40) which is configured to cause the capacitor to be fully charged by performing control of what to bring the fourth switch and one of the second switch and the third switch into a closed state, and to bring the first switch and the other one of the second switch and the third switch into an open state; and
a determination unit configured to determine an open-phase in the three-phase AC power supply on the basis of an output voltage of the rectifier circuit in each state of the first switch, the second switch, the third switch, and the fourth switch controlled by the control unit.

2. The power supply circuit according to claim 1,
wherein the determination unit is configured to determine defects of a phase corresponding to the fourth switch and a phase corresponding to one of the second switch and the third switch when the fourth switch and one of the second switch and the third switch are in a closed state, and the first switch and the other of the second switch and the third switch are in an open state.

3. The power supply circuit according to claim 1 or 2,
wherein the determination unit is configured to determine defects of a phase corresponding to the first switch and a phase corresponding to the other of the second switch and the third switch when the fourth switch and one of the second switch and the third switch are in the open state, and the first switch and the other of the second switch and the third switch are in the closed state.

4. A determination method of a power supply circuit which includes a three-phase AC power supply that includes a first terminal, a second terminal and a third terminal corresponding to three phases, a rectifier circuit that is configured to rectify power of the three-phase AC power supply, a capacitor that is configured to smooth an output voltage of the rectifier circuit, a first switch configured to switch connection and disconnection of the rectifier circuit and the first terminal, a second switch configured to switch connection and disconnection of the rectifier circuit and the second terminal, a third switch configured to switch connection and disconnection of the rectifier circuit and the third terminal, and a fourth switch and an inrush current suppression circuit which are connected together in series and are provided in parallel with the first switch, the method comprising:
performing control of what to bring the fourth switch and one of the second switch and the third switch into a closed state, and to bring the first switch and the other of the second switch and the third switch into an open state, and causing the capacitor to be fully charged; and
determining an open-phase in the three-phase AC power supply on the basis of an output voltage of the rectifier circuit in a state of each of the controlled first switch, second switch, third switch, and fourth switch.

5. A program which is configured to cause a computer of a power supply circuit, which includes a three-phase AC power supply that includes a first terminal, a second terminal and a third terminal corresponding to three phases, a rectifier circuit that is configured to rectify power of the three-phase AC power supply, a capacitor that is configured to smooth an output voltage of the rectifier circuit, a first switch configured to switch connection and disconnection of the rectifier circuit and the first terminal, a second switch configured to switch connection and disconnection of the rectifier circuit and the second terminal, a third switch configured to switch connection and disconnection of the rectifier circuit and the third terminal, and a fourth switch and an inrush current suppression circuit which are connected together in series and are provided in parallel with the first switch, to execute:
performing control of what to bring the fourth switch and one of the second switch and the third switch into a closed state, and to bring the first switch and the other of the second switch and the third switch into an open state, and causing the capacitor to be fully charged; and
determining an open-phase in the three-phase AC power supply on the basis of an output voltage of the rectifier circuit in a state of each of the controlled first switch, second switch, third switch, and fourth switch.
